# EUROPEAN PATENT APPLICATION

(11) **EP 4 549 909 A1**
(43) Date of publication of application: **07.05.2025**
(21) Application number: 23863508.0
(22) Date of filing: 06.09.2023
(51) Int. Cl.: G01N 15/08, G01N 23/2251

(54) **ANALYSIS METHOD FOR PORE DISTRIBUTION OF POROUS STRUCTURE**

(30) Priority: 06.09.2022 KR 20220113080
(71) Applicant: LG Chem, Ltd., Yeongdeungpo-gu Seoul 07336 (KR)
(72) Inventor: KANG, Hosung, Daejeon 34122 (KR); LEE, Sang-Won, Daejeon 34122 (KR); KIM, Kyeong-Rak, Daejeon 34122 (KR); PARK, Je-Seob, Daejeon 34122 (KR)
(74) Representative: Plasseraud IP
(86) International application number: PCT/KR2023/013371
(87) International publication number: WO 2024/054044

(57) **Abstract**

According to an aspect of the present disclosure, there is provided an analysis method of pore distribution of porous structures, comprising observing a cross section of a porous structure using scanning electron microscopy (SEM) to obtain a raw image of the cross section of the porous structure; and quantifying a pore distribution of the obtained raw image through Voronoi diagram.

According to the pore distribution analysis method, it is possible to quantitatively analyze pore distribution of porous structures.

## Description

### TECHNICAL FIELD

The present disclosure relates to an analysis method of pore distribution of porous structures.

The present application claims priority to Korean Patent Application No. 10-2022-0113080 filed on September 6, 2022 in the Republic of Korea, the disclosure of which is incorporated herein by reference.

### BACKGROUND ART

Recently, there is increasing attention paid to energy storage technology. With an extended range of applications as sources of energy for mobile phones, camcorders, laptop computers and electric vehicles, more efforts are being made in the research and development of electrochemical devices. In this aspect, in the field of electrochemical devices, the development of rechargeable secondary batteries is the center of attention.

Among secondary batteries currently in use, lithium secondary batteries developed in the early 1990s are gaining more attention due to higher operating voltage and energy density than traditional batteries including Ni-MH batteries.

A lithium secondary battery includes a positive electrode, a negative electrode, an electrolyte, and a separator. The separator is required to electrically insulate the positive electrode from the negative electrode and increase ionic conductivity by increasing lithium ion permeability based on high porosity. The commonly used polymer substrate of the separator is chiefly made of polyolefin-based materials such as polyethylene (PE) and polypropylene (PP) that are advantageous for pore formation and have high chemical resistance, mechanical properties, and thermal characteristics.

The separator for the lithium secondary battery requires high permeability, low thermal shrinkage, high puncture strength and so on, and with the development towards high capacity and high output batteries, high permeability is the continued requirement.

The separator may be applied in the form of a porous polymer substrate manufactured by mixing a polymer such as polyolefin with a diluent, extruding and stretching to form a film, and extracting the diluent using a solvent to form pores, or a composite separator having an organic-inorganic composite porous layer comprising a binder polymer and inorganic particles on at least one surface of the porous polymer substrate.

In this instance, the properties of the porous polymer substrate applied to the separator for the secondary battery may be variously adjusted depending on the process conditions in the manufacture. In particular, the structure and distribution of the pores of the porous polymer substrate that act as a passage of lithium ions may vary depending on the process conditions.

To determine the pore distribution of a porous structure having the pore structure such as the porous polymer substrate, qualitative evaluation methods involving observing a microscopic image with the naked eye have been chiefly used. However, it is difficult to deduce quantitative criteria due to qualitative criteria.

To quantify the pore distribution of the porous structure, methods for quantifying the pore distribution in a scanning electron microscopy (SEM) image through the Euclidean distance algorithm have been used. However, the distance between pores is affected by the pore size. Additionally, as opposed to population distribution measured in a single image, results are inaccurate, for example, the pore distribution is not uniform.

### SUMMARY

### Technical Problem

Accordingly, the present disclosure is directed to providing a method for analyzing pore distribution of porous structures more quantitatively.

### Technical Solution

To achieve the above-described objective, an aspect of the present disclosure provides an analysis method of pore distribution of porous structures according to the following embodiments.

The analysis method of pore distribution of porous structures according to a first embodiment comprises observing a cross-section of a porous structure using scanning electron microscopy (SEM) to obtain a raw image of the cross-section of the porous structure; and quantifying a pore distribution of the obtained raw image through Voronoi diagram.

According to a second embodiment, in the first embodiment, the quantifying of the pore distribution comprises converting the raw image to a Voronoi diagram area image using a Voronoi diagram algorithm.

According to a third embodiment, in the second embodiment, the converting to the Voronoi diagram area image comprises converting the raw image to a binary image (a 2D binary image) that is segmented into pixels representing a plurality of structure regions where pixels of the raw image are placed adj acent to each other or over each other, and pixels representing a pore region between the plurality of structure regions, and converting the binary image to the Voronoi diagram area image using the Voronoi diagram algorithm.

According to a fourth embodiment, in the second or third embodiment, the quantifying of the pore distribution comprises obtaining correlation data between a pore area of the raw image and a Voronoi diagram area corresponding to each pore of the raw image, and analyzing the pore distribution of the porous structure using the correlation data.

According to a fifth embodiment, in any one of the second to fourth embodiments, the quantifying of the pore distribution comprises creating a graph in which a pore area of the raw image is an x axis, and the Voronoi diagram area is a y axis, and presenting data about the pore area of the raw image and its corresponding Voronoi diagram area on the graph, and analyzing the pore distribution of the porous structure using the graph.

According to a sixth embodiment, in any one of the second to fifth embodiments, a pore area of the raw image is calculated using pixels of the raw image.

According to a seventh embodiment, in any one of the third to fifth embodiments, a pore area of the raw image is calculated using a pore area of the binary image.

According to an eighth embodiment, in the seventh embodiment, the pore area of the binary image is calculated using pixels of the binary image.

According to a ninth embodiment, in any one of the fourth to eighth embodiments, the analysis method of pore distribution of porous structures further comprises obtaining the correlation data for a plurality of cross-sections of the porous structure, and applying Bayesian population estimation to estimate the pore distribution of the porous structure.

### Advantageous Effects

According to an aspect of the present disclosure, it may be possible to analyze the pore distribution of the porous structure. In particular, the present disclosure may quantitatively analyze the pore distribution in the scanning electron microscopy (SEM) image of the porous structure.

Specifically, according to an aspect of the present disclosure, it may be possible to analyze the pore size and pore location in the porous structure. Additionally, it may be possible to analyze the degree of dispersion to which pores spread out in the entire porous structure and the degree at which pores are densely located at only some regions.

In particular, according to an aspect of the present disclosure, it may be possible to analyze the pore distribution without the influence of pore size.

### BRIEF DESCRIPTION OF THE DRAWINGS

The accompanying drawings illustrate exemplary embodiments of the present disclosure and together with the foregoing disclosure, serve to provide a further understanding of the technical aspect of the present disclosure, and thus the present disclosure should not be construed as being limited to the drawings. In the drawings, for clarity of description, the shape, size, scale or proportion of the elements may be exaggerated for emphasis.
FIG. 1 is a scanning electron microscopy (SEM) raw image of example 1.
FIG. 2 is a Voronoi diagram in a 2D binary image of example 1.
FIG. 3 is a visualization of an area in the Voronoi diagram of example 1.
FIG. 4 is a visualization of an area in the Voronoi diagram of example 1.
FIG. 5 is an SEM raw image of example 2.
FIG. 6 is a Voronoi diagram in a 2D binary image of example 2.
FIG. 7 is a visualization of an area in the Voronoi diagram of example 2.
FIG. 8 is a visualization of an area in the Voronoi diagram of example 2.
FIG. 9 is a graph illustrating a correlation between a pore area of the 2D binary image and the Voronoi diagram area in example 1.
FIG. 10 is a graph illustrating a correlation between a pore area of the 2Dbinary image and the Voronoi diagram area in example 2.

### DETAILED DESCRIPTION

Hereinafter, the present disclosure will be described in detail with reference to the accompanying drawings. It should be understood that the terms or words used in the present disclosure and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

It should be further understood that "include", "comprise", or "have" when used in the specification, specifies the presence of stated elements and does not preclude the presence or addition of one or more other elements unless expressly stated otherwise.

Throughout the disclosure, 'A and/or B' refers to either A or B or both.

In the present disclosure, Voronoi diagram may refer to a partition of a plane into a set of points closer to a specific point.

In the present disclosure, the unit of a Voronoi area or a pore area in a scanning electron microscopy (SEM) image is pixel² unless expressly stated otherwise.

An analysis method of pore distribution of porous structures according to an aspect of the present disclosure includes obtaining a raw image of a cross-section of a porous structure by observing the cross-section of the porous structure by SEM and quantifying pore distribution of the obtained raw image through Voronoi diagram.

There have been attempts to analyze pore distribution of porous structures using permeability or electrical resistance, but even though permeability or electrical resistance is the same, pore distributions may be actually different. Additionally, there have been attempts to analyze pore distribution using Euclidean distance conversion, but it failed to control the influence of pore size or distance between pores on pore distribution analysis.

The pore distribution analysis method according to the present disclosure may provide more accurate pore distribution analysis results of porous structures reflecting the actual pore distribution by use of Voronoi diagram. Here, the pore distribution may include pore size and location, and the pore location may refer to the degree of dispersion to which pores spread out in the porous structure and/or the degree at which pores are densely located at only some regions.

In an embodiment of the present disclosure, to analyze the pore distribution of the porous structure, the method may include the step of preparing the porous structure.

Here, the porous structure to be analyzed is not limited to a specific material, and may include any structure having a plurality of pores. For example, the porous structure may be a porous polymer substrate such as a filter or a nonwoven fabric, and specifically, a porous polymer substrate included in a separator for a secondary battery.

The porous polymer substrate may refer to a separator fabric before an organic-inorganic composite porous layer is formed, in the separator having the organic-inorganic composite porous layer. In the porous polymer substrate, a plurality of polymer fibers may be arranged in parallel or over each other, and a plurality of pores may be formed between the plurality of polymer fibers, and the porous polymer substrate may include a fiber region and a pore region.

The porous polymer substrate may be, specifically, a porous polymer film substrate or a porous polymer nonwoven substrate.

The porous polymer film substrate may be a porous polymer film made of polyolefin such as polyethylene and polypropylene, and the polyolefin porous polymer film substrate may, for example, exercise a shutdown function at the temperature of 80 to 130°C.

In this instance, the polyolefin porous polymer film substrate may be formed from at least one of polyolefin-based polymer, for example, polyethylene such as high density polyethylene, linear low density polyethylene, low density polyethylene, ultra high molecular weight polyethylene, polypropylene, polybutylene, polypentene and so on.

Additionally, in addition to the polyolefin, the porous polymer film substrate may be formed into the shape of a film using a variety of polymers including polyester. Additionally, the porous polymer film substrate may be formed with a stack structure of two or more film layers, and each film layer may be formed from at least one polymer of polyolefin, polyester and so on.

Additionally, the porous polymer film substrate and the porous nonwoven substrate may be formed from at least one of polyolefin, polyester (polyethyleneterephthalate, polybutyleneterephthalate, polyethylenenaphthalate, etc.), polyacetal, polyamide, polycarbonate, polyimide, polyetheretherketone, polyethersulfone, polyphenyleneoxide, polyphenylenesulfide and so on.

The thickness of the porous polymer substrate is not limited to a particular range, but may be, specifically, 1 to 100 *µ*m, and more specifically 5 to 50 *µ*m, and the pore size and porosity present in the porous polymer substrate is not limited to a particular range, but may be 0.01 to 50 *µ*m and 10 to 95%, respectively.

The porous polymer substrate may, in particular, include a porous polyolefin substrate, and in this instance, the polyolefin may comprise a copolymer of two or more of polyethylene, polypropylene, polybutylene, polypentene, polyhexene, polyoctene, ethylene, propylene, butene, pentene, 4-methylpentene, hexene, octene, or a mixture thereof.

In particular, the polyethylene may include low density polyethylene (LDPE), linear low density polyethylene (LLDPE), high density polyethylene (HDPE) and so on, and among them, high density polyethylene having high crystallinity and high melting point of resin may be chiefly used.

In an embodiment of the present disclosure, the weight average molecular weight of the polyolefin may be 200,000 to 1,500,000 or 220,000 to 1,000,000 or 250,000 to 800,000. In the present disclosure, since high molecular weight polyolefin having the weight average molecular weight of 200,000 to 1,000,000 is used as a starting material to manufacture the separator, it may be possible to ensure uniformity of the separator and film forming process efficiency, thereby obtaining the separator with high strength and heat resistance.

Subsequently, the method includes the step of obtaining the raw image of the porous polymer substrate by observing the prepared porous structure using SEM.

According to an embodiment of the present disclosure, the image of the porous polymer substrate may be obtained at 20,000x magnification in the conditions of 5kV, 10uA using SEM.

Additionally, the method includes quantifying the pore distribution of the obtained raw image through Voronoi diagram.

In an embodiment of the present disclosure, the step of quantifying the pore distribution may include a process of converting the raw image to a Voronoi diagram area image using the Voronoi diagram algorithm.

The process of converting to the Voronoi diagram area image may be performed using the raw image itself. Alternatively, the raw image may be converted to a binary image (a 2D binary image) that is segmented into pixels representing a plurality of structure regions where the pixels of the raw image are placed adjacent to each other or over each other, and pixels representing a pore region between the plurality of structure regions, and the binary image may be converted to the Voronoi diagram area image using the Voronoi diagram algorithm. Since it is easier to identify the structure region and the pore region in the binary image than the raw image, it may be possible to convert to the Voronoi diagram area image more accurately.

Any technique known in the technical field may be used to convert the raw image or the binary image to the Voronoi diagram area image. For example, the raw image may be converted to the Voronoi diagram area image by marking a point at a location corresponding to each pore region in the raw image or the binary image, and connecting a set of points closer to a specific point.

In an embodiment of the present disclosure, the step of converting the raw image of the porous structure to the binary image may comprise converting the raw image of the structure obtained by observing using SEM to the binary image through thresholding. The binary image may allow for more clear observation of the pore region and the non-pore region in the raw image of the structure obtained by observing using SEM.

The thresholding may be global thresholding, Otsu thresholding, or adaptive thresholding.

The global thresholding sets a threshold and treats pixels having the pixel value greater than the threshold as black, and pixels having the pixel value less than the threshold as white.

The Otsu thresholding creates the binary image using Otsu's algorithm. The Otsu's algorithm sets an arbitrary threshold when converted to the binary image, separates pixels into two classes and finds an intensity distribution of the two classes, and this process is repeated. Subsequently, the threshold when the intensity distribution of the two classes is most uniform is selected from all possible cases. The Otsu's algorithm automatically finds the optimal threshold.

The adaptive thresholding segments an image into regions, and finds a threshold when converted to the binary image using only neighboring pixel values. When the original image has many background colors or it is difficult to create a clear binary image by one threshold due to a variety of colors, the use of adaptive thresholding may create the binary image with high quality.

In an embodiment of the present disclosure, the step of quantifying the pore distribution may comprise obtaining correlation data between the pore area of the raw image and Voronoi diagram area corresponding to each pore area of the raw image, and analyzing the pore distribution of the porous structure based on the degree of dispersion of the data.

For example, a graph in which the pore area of the raw image is x axis and the Voronoi diagram area is y axis may be created, data about each pore area of the raw image and its corresponding Voronoi diagram area may be shown on the graph, and the pore distribution of the porous structure may be analyzed based on the degree of dispersion of the data in the graph. In this instance, there is no limitation on how the correlation data is presented, and for example, the graph is not limited to a particular format or type.

More specifically, the graph may be created in which a) any one of the pore area measured in the raw image obtained by observing the cross-section of the porous structure using SEM, and the pore area measured in the binary image converted from the raw image is x axis, and b) each Voronoi area measured in Voronoi diagram representing the raw image obtained by observing the cross-section of the porous structure using SEM or the binary image converted from the raw image is y axis, and the correlation may be shown on the graph. For example, when the Voronoi area of a specific pore is 500 and the area measured in the binary image is 100, the graph in which y axis is the Voronoi area and x axis is the area measured in the binary image may be drawn and the specific pore may match the coordinates (100, 500).

By the values in the graph that match the values of the pores, the pore distribution in the porous structure may be analyzed. For example, by using the degree of dispersion of the values of the pores on the graph, the degree of dispersion of pore locations in the porous structure may be determined. Alternatively, the pore location distribution may be analyzed through the Voronoi area value that is proportional to the distance between each pore obtained through the Voronoi diagram. For example, the smaller distance between pores, the smaller Voronoi area, and the longer distance between pores, the larger Voronoi area, and using this fact, the pore location distribution may be analyzed.

In an embodiment of the present disclosure, the pore area of the raw image may be calculated using the pixels of the raw image. Additionally, the pore area calculated using the pixels the binary image converted from the raw image may be the pore area of the raw image. The pore area may be converted to the actual size using the SEM observation conditions of the porous structure.

In an embodiment of the present disclosure, the method may further include the steps of obtaining the correlation data for a plurality of cross-sections of the porous structure and applying Bayesian estimation to estimate the pore distribution of the porous structure. For example, the raw image is obtained by observing the plurality of cross-sections of the porous structure using SEM. Additionally, the correlation between the Voronoi diagram area of each pore in the obtained raw image and each pore area in the raw image may be represented on the graph multiple times for each cross-section, and Bayesian population estimation may be applied to estimate the pore distribution of the porous structure.

When the image obtained by observing using SEM is a part of the entire porous structure, it may be possible to analyze the pore distribution of the entire porous structure without obtaining images of all parts of the entire porous structure using Bayesian estimation.

The porous polymer substrate to be analyzed for pore distribution in the present disclosure may be applied as the separator of the secondary battery, but may be manufactured as the separator with enhanced stability having the organic-inorganic composite porous layer on at least one surface in the field requiring thermal stability.

The separator with enhanced stability having the organic-inorganic composite porous layer on at least one surface comprises the organic-inorganic composite porous layer on at least one surface of the porous polymer substrate, the organic-inorganic composite porous layer comprising inorganic particles and a binder polymer located on all or part of the surface of the inorganic particles to connect and hold the inorganic particles together.

The binder polymer may include any polymer commonly used to form the organic-inorganic composite porous layer in the technical field. **In** particular, polymer having the glass transition temperature (Tg) of -200 to 200°C may be used to improve the mechanical properties of the finally formed organic-inorganic composite porous layer such as flexibility and elasticity. The binder polymer faithfully acts as a binder to connect and stably hold the inorganic particles together, thereby contributing to the prevention of degradation of mechanical properties of the separator having the organic-inorganic composite porous layer.

Additionally, the binder polymer does not need to have the ability to conduct ions, but when polymer having the ability to conduct ions is used, the performance of an electrochemical device may be further improved. Accordingly, the binder polymer may have as high dielectric constant as possible. Actually, the degree of dissociation of salt in the electrolyte solution relies on the dielectric constant of the solvent of the electrolyte solution, so the higher dielectric constant of the binder polymer, the higher degree of dissociation of salt in the electrolyte. The dielectric constant of the binder polymer may range from 1.0 to 100 (measurement frequency = 1 kHz), and in particular, may be 10 or more.

In addition to the above-described function, when impregnated with the liquid electrolyte solution, the binder polymer may form a gel, exhibiting a high degree of swelling in the electrolyte solution. Accordingly, the binder polymer has the solubility parameter, i.e., Hildebrand solubility parameter in a range between 15 and 45 MPa^{1/2} or 15 and 25 MPa^{1/2} and 30 and 45 MPa^{1/2}. Accordingly, hydrophilic polymers having more polar groups may be used rather than hydrophobic polymers such as polyolefins. When the solubility parameter is less than 15 MPa^{1/2} and more than 45 MPa^{1/2}, the polymer may not swell by the commonly used liquid electrolyte solutions for batteries.

Non-limiting examples of the binder polymer may include polyvinylidene fluoride-co-hexafluoropropylene, polyvinylidene fluoride-co-trichloroethylene, polymethylmethacrylate, polybutylacrylate, polybutylmethacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose, but is not limited thereto.

Non-limiting examples of the inorganic particles may include high dielectric constant inorganic particles having the dielectric constant of 5 or more, and specifically 10 or more, inorganic particles having the ability to transfer lithium ions or a mixture thereof.

Non-limiting examples of the inorganic particles having the dielectric constant of 5 or more may include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, AlO(OH), Al₂O₃·H₂O, or a mixture thereof.

In the present disclosure, 'the inorganic particles having the ability to transfer lithium ions' refer to inorganic particles that contain lithium but do not store lithium and have the function of transferring lithium ions, and non-limiting examples of the inorganic particles having the ability to transfer lithium ions may include lithium phosphate (Li₃PO₄); lithium titanium phosphate (LiₓTi_{y}(PO₄)₃, 0<x<2, 0<y<3); lithium aluminum titanium phosphate (LiₓAl_{y}Ti_{z}(PO₄)₃, 0 <x<2, 0<y<1, 0<z<3); (LiAlTiP)ₓO_{y} based glass (0<x<4, 0<y<13) such as 14Li₂O-9Al₂O₃-38TiO₂-39P₂O₅; lithium lanthanum titanate (LiₓLa_{y}TiO₃, 0<x<2, 0<y<3); lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄; lithium nitride (LiₓN_{y}, 0<x<4, 0<y<2) such as Li₃N; SiS₂ based glass (LiₓSi_{y}S_{z}, 0<x<3, 0<y<2, 0<z<4) such as Li₃PO₄-Li₂S-SiS₂; P₂S₅ based glass (LiₓP_{y}S_{z}, 0<x<3, 0<y<3, 0<z<7) such as LiI-Li₂S-P₂S₅; or a mixture thereof.

According to an embodiment of the present disclosure, the organic-inorganic composite porous layer may be an oil-based coating layer using an oil-based slurry or an aqueous coating layer using an aqueous slurry, and the aqueous coating layer is advantageous for thin film coating and reduces the resistance of the separator.

The separator with enhanced stability having the organic-inorganic composite porous layer on at least one surface of the porous polymer substrate may be, specifically, manufactured as follows.

First, to form the organic-inorganic composite porous layer, the binder polymer may be dissolved or dispersed in a dispersion medium, and the inorganic particles may be added and dispersed to prepare an organic-inorganic composite porous layer-forming composition (slurry). The inorganic particles which have been pulverized into a preset average particle size may be added, or after the inorganic particles are added to the mixture of the binder polymer and the dispersion medium, the inorganic particles may be pulverized into the preset average particle size under particle size control using ball milling and dispersed.

The organic-inorganic composite porous layer-forming composition is coated on the porous polymer substrate. The coating method is not limited to a particular method, but a slot coating or dip coating method is preferred. The slot coating is a method that coats the composition supplied through a slot die on the front surface of the substrate and the thickness of the coating layer may be adjusted according to the flow rate of a constant volume pump. Additionally, the dip coating is a method that coats the substrate by dipping the substrate in a tank containing the composition, and the thickness of the coating layer may be adjusted according to the concentration of the composition and the speed of taking the substrate out of a composition tank, and to control the coating thickness more accurately, post-metering may be performed through a Mayor bar after the dipping.

The porous polymer substrate coated with the organic-inorganic composite porous layer-forming composition may be dried using a dryer such as an oven to form the organic-inorganic composite porous layer on at least one surface of the porous polymer substrate.

In an embodiment of the present disclosure, the binder polymer may attach the inorganic particles to each other to bind them together (i.e., the binder polymer connects and holds the inorganic particles together), and the inorganic particles and the porous polymer substrate may be bound together by the binder polymer. The inorganic particles of the organic-inorganic composite porous layer may be substantially in contact with each other to form interstitial volume, and in this instance, the interstitial volume refers to a space defined by the inorganic particles in substantially contact with each other in the closed packed or densely packed structure of the inorganic particles. The interstitial volume between the inorganic particles may become void, forming the pores of the organic-inorganic composite porous layer.

In this instance, non-limiting examples of the dispersion medium used may include at least one selected from acetone, tetrahydrofuran, methylenechloride, chloroform, dimethylformamide, N-methyl-2-pyrrolidone, methylethylketone, cyclohexane, methanol, ethanol, isopropylalcohol, propanol, or water.

Additionally, in an embodiment of the present disclosure, after it is applied to the porous polymer substrate, the organic-inorganic composite porous layer-forming composition may be dried at the temperature of 20 to 70°C or 23 to 60°C in the relative humidity condition of 30 to 80% or 50% to 80% for 1 minute to 2 hours, 5 minutes to 1 hour, or 10 minutes to 1 hour to remove the solvent to manufacture the separator with enhanced stability having the organic-inorganic composite porous layer on at least one surface.

When the analysis method of pore distribution of porous structures according to an embodiment of the present disclosure is used to analyze the pore distribution of the porous polymer substrate for the separator of the secondary battery, the pore distribution analysis result in the porous polymer substrate may completely correspond to the pore distribution characteristics of the separator having the organic-inorganic composite porous layer.

Hereinafter, examples will be described in detail to provide a detailed description of the present disclosure. However, the examples according to the present disclosure may be modified in many other forms, and the scope of the present disclosure should not be interpreted as being limited to the following examples. The examples of the present disclosure are provided to fully explain the present disclosure to persons having ordinary skill in the art.

### Example 1

A polyethylene porous film (manufacturer: LG Chem.) having the permeability of 60 sec/100cc and the average pore size of 105 pixel² was prepared. **In** this instance, the average pore size was measured on the basis of pixels of an SEM image.

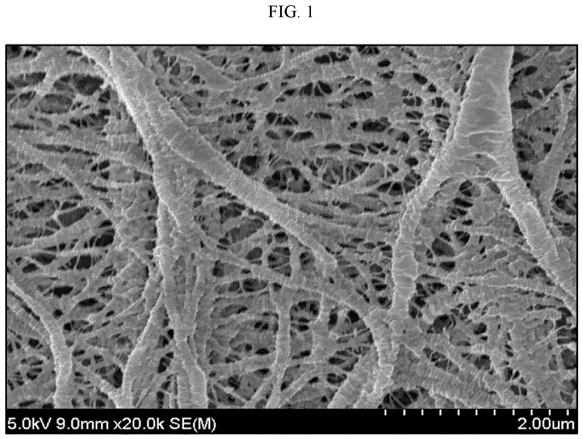

The polyethylene was observed in the conditions of 5 kV, 10 uA, 20,000x magnification using SEM (manufacturer: Hitachi, product name: S-4800) to obtain a raw image of the polyethylene (FIG. 1).

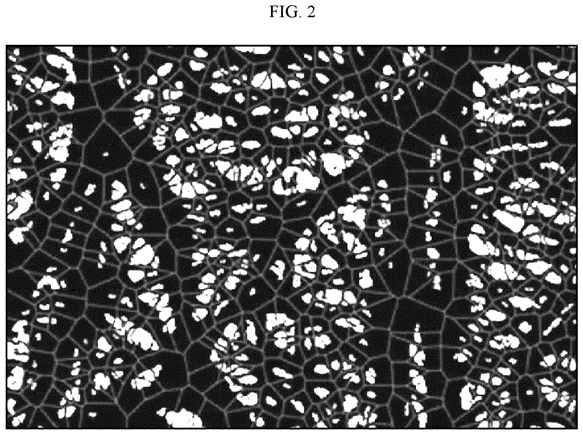

Subsequently, the raw image of FIG. 1 was converted to a binary image that is segmented into pixels representing a plurality of polymer regions where pixels are placed adjacent to each other or over each other, and pixels representing a pore region between the plurality of polymers, and Voronoi diagram was applied to the obtained binary image to convert it to a Voronoi diagram area image (FIG. 2).

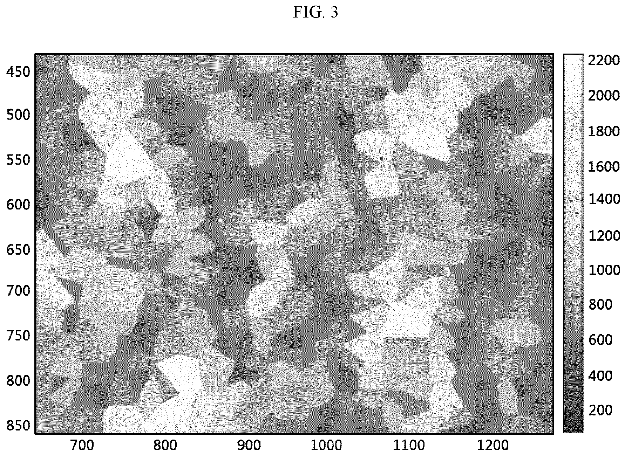

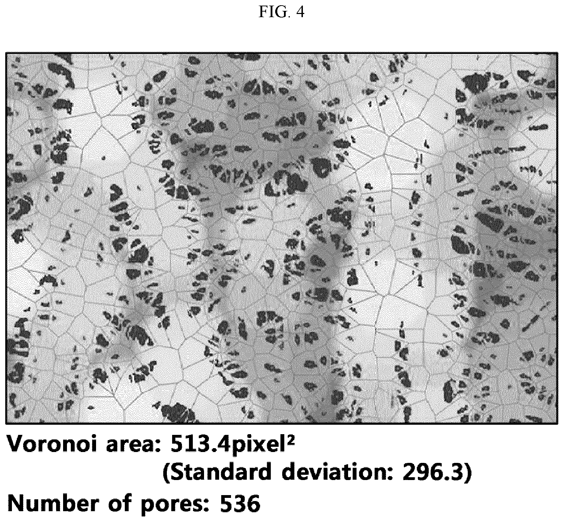

FIGS. 3 and 4 are visualization of area in the Voronoi diagram of example 1. FIG. 3 is the Voronoi diagram filled with color according to the size of each area of the Voronoi diagram. The area size was calculated on the basis of pixels in the binary image, and may be converted to the actual size using the SEM imaging conditions. FIG. 4 shows that the average of Voronoi diagram areas calculated on the basis of pixels is 513.4 pixel² (standard deviation: 296.3), and the number of pores is 536.

### Example 2

A polyethylene porous film (manufacturer: LG Chem.) having the permeability of 64 sec/100cc and the average pore size of 45 pixel² was prepared.

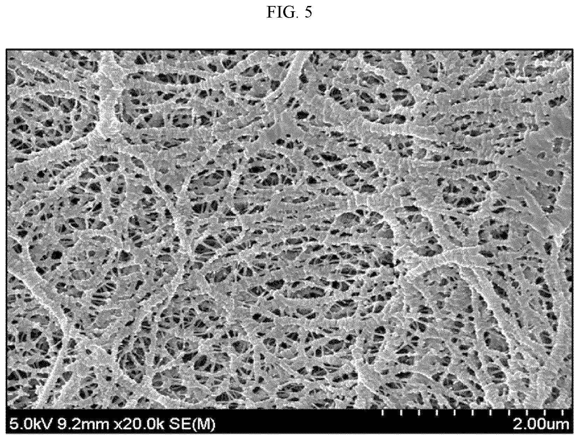

The polyethylene was observed in the conditions of 5kV, 10uA, 20,000x magnification using SEM (manufacturer: Hitachi, product name: S-4800) to obtain a raw image of the polyethylene (FIG. 5).

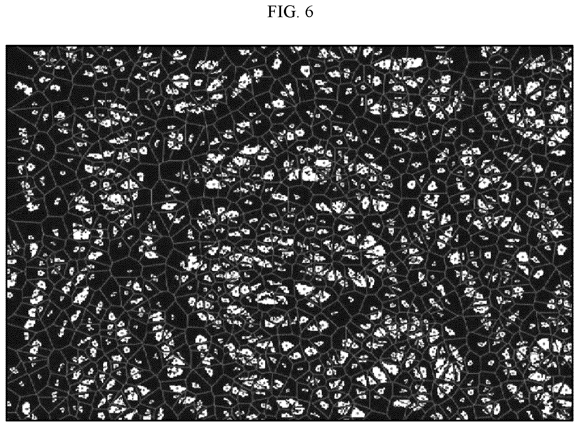

Subsequently, the raw image of FIG. 5 was converted to a binary image that is segmented into pixels representing a plurality of polymer regions where pixels are placed adjacent to each other or over each other, and pixels representing a pore region between the plurality of polymers, and Voronoi diagram was applied to the obtained binary image to convert it to a Voronoi diagram area image (FIG. 6).

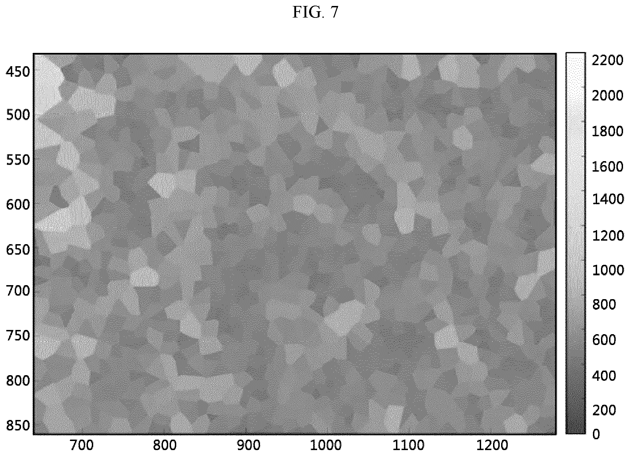

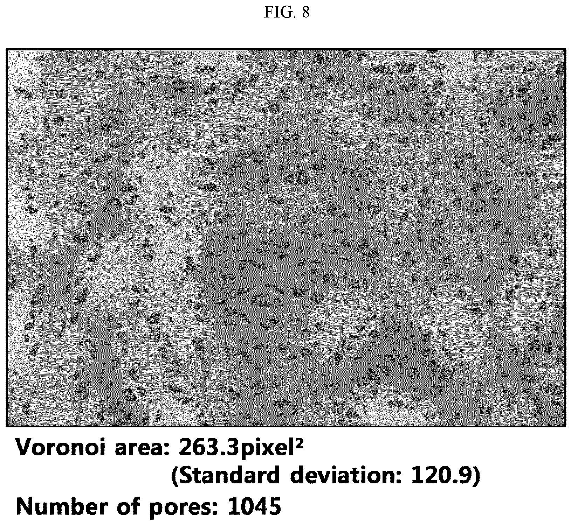

FIGS. 7 and 8 are visualization of area in the Voronoi diagram of example 2. FIG. 7 is the Voronoi diagram filled with color according to the size of each area of the Voronoi diagram. The area size was calculated on the basis of pixels in SEM, and may be converted to the actual size using the SEM imaging conditions. FIG. 8 shows that the average of Voronoi diagram areas calculated on the basis of pixels is 263.3 pixel² (standard deviation: 120.9), and the number of pores is 1045.

In examples 1 and 2, the Voronoi diagram area average value of example 2 is smaller than the Voronoi diagram area average value of example 1, and the standard deviation of example 2 is smaller. Since the Voronoi diagram area is proportional to the distance between pores, the pore distribution of example 2 was found to be more uniform than the pore distribution of example 1. The SEM images of FIGS. 1 and 5 confirmed that the distance between pores of example 1 is larger.

The average particle size calculated on the basis of pixels in the SEM image was 105 in example 1, and example 2 showed a smaller average particle size of 45, but the pore location distribution of example 2 was more uniform, so permeability of example 2 was found to be higher.

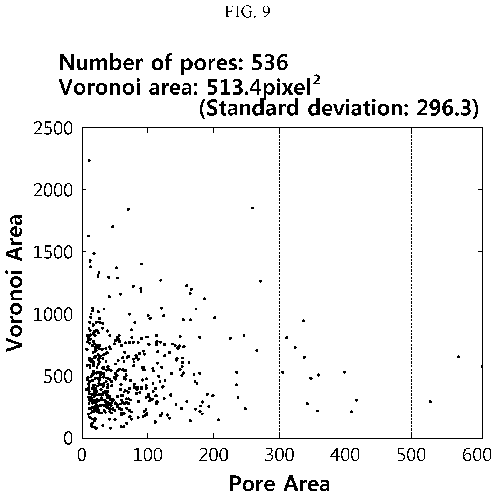

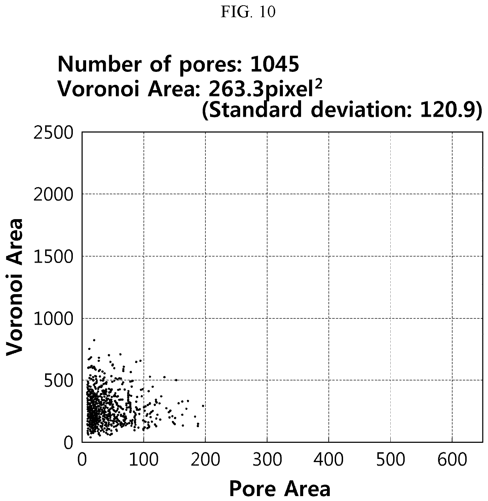

FIGS. 9 and 10 are graphs in which the pore area of the binary images converted from the raw images of cross-sections of the porous films of examples 1 and 2 is represented on x axis and the Voronoi diagram area is represented on y axis.

Referring to FIGS. 9 and 10, it was confirmed that the pore area of data and the Voronoi diagram area shown in FIG. 9 were all large. That is, it was confirmed that the pore area and distance between pores of example 1 was larger than the pore area and pore distance of example 2. This is the same result as shown in FIGS. 1 and 5, i.e., the SEM images obtained by observing examples 1 and 2.

While the present disclosure has been hereinabove described with regard to a limited number of embodiments and drawings, the present disclosure is not limited thereto, and it is obvious to those skilled in the art that various changes and modifications may be made thereto within the technical aspect of the present disclosure and the appended claims and equivalents thereof.

## Claims

1. An analysis method of pore distribution of porous structures, comprising:
observing a cross-section of a porous structure using scanning electron microscopy (SEM) to obtain a raw image of the cross-section of the porous structure; and
quantifying a pore distribution of the obtained raw image through a Voronoi diagram.

2. The analysis method of pore distribution of porous structures according to claim 1, wherein the quantifying of the pore distribution comprises converting the raw image to a Voronoi diagram area image using a Voronoi diagram algorithm.

3. The analysis method of pore distribution of porous structures according to claim 2, wherein the converting to the Voronoi diagram area image comprises converting the raw image to a 2D binary image that is segmented into pixels representing a plurality of structure regions where pixels of the raw image are placed adjacent to each other or over each other, and pixels representing a pore region between the plurality of structure regions, and converting the binary image to the Voronoi diagram area image using the Voronoi diagram algorithm.

4. The analysis method of pore distribution of porous structures according to claim 2, wherein the quantifying of the pore distribution comprises:
obtaining correlation data between a pore area of the raw image and a Voronoi diagram area corresponding to each pore of the raw image, and
analyzing the pore distribution of the porous structure using the correlation data.

5. The analysis method of pore distribution of porous structures according to claim 2, wherein the quantifying of the pore distribution comprises:
creating a graph in which a pore area of the raw image is an x axis, and the Voronoi diagram area is a y axis, and
presenting data about the pore area of the raw image and its corresponding Voronoi diagram area on the graph, and analyzing the pore distribution of the porous structure using the graph.

6. The analysis method of pore distribution of porous structures according to claim 2, wherein a pore area of the raw image is calculated using pixels of the raw image.

7. The analysis method of pore distribution of porous structures according to claim 3, wherein a pore area of the raw image is calculated using a pore area of the binary image.

8. The analysis method of pore distribution of porous structures according to claim 7, wherein the pore area of the binary image is calculated using pixels of the binary image.

9. The analysis method of pore distribution of porous structures according to claim 4, further comprising:
obtaining the correlation data for a plurality of cross sections of the porous structure, and applying Bayesian population estimation to estimate the pore distribution of the porous structure.
